# EUROPÄISCHE PATENTSCHRIFT

(11) **EP 1 264 195 B1**
(45) Veröffentlichungstag und Bekanntmachung des Hinweises auf die Patenterteilung: **08.04.2009**
(21) Anmeldenummer: 01911704.3
(22) Anmeldetag: 28.02.2001
(51) Int. Cl.: G01S 5/14, G01S 13/94, G01S 13/93, G08G 5/00

(54) **TELEMATIK-VERFAHREN FÜR HUBSCHRAUBER**
TELEMATICS METHOD FOR HELICOPTERS
PROCEDE DE TELEMATIQUE POUR HELICOPTERES

(30) Priorität: 03.03.2000 DE 10010134
(43) Veröffentlichungstag der Anmeldung: 11.12.2002
(73) Patentinhaber: EADS Deutschland GmbH, 85521 Ottobrunn (DE)
(72) Erfinder: BRAUN, Günter, 82041 Deisenhofen (DE); KLAUSING, Helmut, 82234 Wessling-Hochstadt (DE)
(86) Internationale Anmeldenummer: PCT/EP2001/002203
(87) Internationale Veröffentlichungsnummer: WO 2001/065273

(56) Entgegenhaltungen:
- EP-A- 0 911 647
- WO-A-96/02905
- WO-A-99/40457
- WO-A-99/46877
- DE-C- 3 922 086
- DE-C- 4 323 511
- MURAKAMI H ET AL: "TELEMEDICINE USING MOBILE SATELLITE COMMUNICATION" IEEE TRANSACTIONS ON BIOMEDICAL ENGINEERING,US,IEEE INC. NEW YORK, Bd. 41, Nr. 5, 1. Mai 1994 (1994-05-01), Seiten 488-497, XP000770263 ISSN: 0018-9294

## Beschreibung

Die Erfindung bezieht sich auf ein Telematik-Verfahren für Hubschrauber in Verbindung mit einem allwetterfähigen Flugführungs- und Hinderniswarnsystem gemäß dem Obergriff des Patentanspruchs 1.

Telematik-Verfahren für Hubschrauber sind beispielsweise aus DBP 3922086 und 4323511 bekannt.

Telematik ist ein neuer technischer Begriff, der aus den Begriffen Telekommunikation und Informatik gebildet worden ist und eine Informationsverarbeitung sowie eine Informationsvermittlung beinhaltet. Die Telematik geht also über eine reine Informationsverarbeitung innerhalb eines Verkehrsträgers hinaus. Die Verkehrstelematik bietet bereits heute eine Fülle von Anwendungsmöglichkeiten und ist insbesondere hinsichtlich der damit möglichen Mehnivertdienste äusserst zukunftsträchtig. Eine wesentliche Rolle spielt hierbei das Zusammenwirken von Ortung- beispielsweise mittels GPS- mit der Mobilkommunikation über Satelliten oder terrestrische Mobilfunknetze. Durch die Weiterentwicklung der Übertragungstechnik bei Mobilfunk-Satellitensystemen wie auch im terrestrischen Mobilfunk (UMTS) werden künftig auch grössere Informationsmengen schnell übertragen werden, was die Zahl der Anwendungen für Telematiksysteme weiter steigert.

Aus WO 96/02905 ist ein Konzept auf dem Gebiet der Verkehrstelematik hinsichtlich Verkehrsleitung, Notruf- und Pannensysteme mit Daten- und Sprachübertragung bekannt, welches auch auch für den Einsatz von Hubschraubern die Möglichkeit einer erheblichen Steigerung der Effizienz beim Einsatz unter allen Wetterbedingungen bietet. Wesentlich hierbei ist die Entwicklung einer Infrastruktur, die sowohl im Bereich der Diensteanbieter- wie beispielsweise Notrufzentralen- als auch im Bereich der Kommunikationssysteme- z. b. für Satellitenmobilfunksysteme wie Iridium, Globalstar und ICO-eine ausreichende aufgabenbezogene und räumliche Abdeckung bietet. Durch das derzeit stattfindende rasche Wachstum bei Mobilfunk-Endgeräten wird der Aufbau dieser Infrastrukturerheblich stimuliert.

Der vorliegenden Erfindung liegt die Aufgabe zugrunde, ein Telematik-Konzept für den Hubschraubereinsatz zu adaptieren, das die durch Allwetter-Flugführungs- und Hinderniswarnsysteme- insbesondere Heliradar- zu allen Zeiten möglichen Hubschraubereinsätze hinsichtlich aller ablaufenden Vorgänge und damit deren Effizienz und Sicherheit verbessert, wobei für Verarbeitung und Übertragung von Daten und Sprache alle schon vorhandenen, standardisierten und systemspezifischen Schnittstellen konsequent genutzt werden können.

Diese Aufgabe wird durch die im Anspruch 1 aufgezeigten Maßnahmen gelöst. In den Unteransprüchen sind Ausgestaltungen und Weiterbildungen angegeben und in der nachfolgenden Beschreibung werden Ausführungsbeispiele erläutert und diese Erläuterungen durch die Figuren der Zeichnung ergänzt. Es zeigen:
- Fig. 1: ein Blockschaltbild bezüglich eines Ausführungsbeispiels für das vorgeschlagene Telematik-Konzept in schematischer Darstellung,
- Fig. 2: ein Blockschaltbild eines Ausführungsbeispiels bezüglich eines Aufbaus der Zentralen für das Verbands- und Flottenmanagment sowie die Flugsicherheit von Hubschraubern, sowie anderer Zentralen, beispielsweise von Notruf- und Verkehrsleitzentralen oder Kliniken in schematischer Darstellung.

Das hier vorgeschlagene Verfahren eines Telematikkonzeptes erlaubt eine Vielzahl von Telematikanwendungen während des Hubschrauberbetriebs, also vor, während und nach einer spezifischen Mission, wie nachfolgende Ausführungsbeispiele verdeutlichen sollen:

Das Zusammenspiel von Ortungssystemen, die sich wie GPS vor allem auf Satelliten abstützen, mit mobiler Sprach- und Datenübertragung erlaubt den Aufbau eines effektiven Verbands- und Flottenmanagements, das ganz oder teilweise eine automatisierte Übertragung von Positions- und Einsatzinformationen zwischen Hubschraubern und Zentrale durchführt. Die Einsatzleitung oder eine entsprechende Zentrale kennt damit zu jedem Zeitpunkt den Ort der einzelnen Hubschrauber und kann mit diesen außerdem noch Daten, Fax, SMS (Short Meesage Service), Sprachmitteilungen und auch Videoinformationen austauschen.

Hubschrauber, die einem aktuellen Einsatzort am nächsten sind, können damit von einer Leitzentrale gezielt eingesetzt werden. Dabei kann durch entsprechenden Datenaustausch auch der für den Einsatzfall am besten gerüstete Hubschrauber ausgewählt werden. Dies wird zunächst weitgehend automatisch ablaufen, ohne daß die Besatzungen mündlich abgefragt werden müssen.

Nachdem sich Hubschrauber in der Regel außerhalb überwachter bzw. zu überwachender Gebiete (Luftkorridore) bewegen, erlaubt eine laufende genaue Positionsbestimmung von Hubschraubern - beispielsweise mittels GPS - und die Positionsübermittlung an eine Zentrale selbst bei hoher Hubschrauberdichte einen effizienten Hubschraubereinsatz ohne Gefahr von Kollisionen, selbst in Katastrophenfällen oder bei schlechter Sicht. Durch ein Auswertesystem in der Zentrale wird automatisch vor gefährlichen Annäherungen gewarnt. Alternativ ist es problemlos möglich, eine solche Auswerteeinheit auch im Hubschrauber zu installieren oder als Teil eines Flugführungsrechners - beispielsweise von Heliradar - zu implementieren. Voraussetzung hierfür ist nur die laufende Übertragung aller Positionsdaten von der Zentrale an die im Luftraum befindlichen Hubschrauber bzw. Flugkörper..

Das vorliegende Verfahren erlaubt weiterhin eine automatische, halbautomatische oder manuell gesteuerte Kommunikation mit Datenbanken, um für Missionszwecke und/oder Flugsicherheit relevante Daten abzurufen und aktuelle Daten aus dem Umfeld des Hubschraubers - wie beispielsweise Wetter, Hinderniskulisse, Bilder etc - an diese Datenbanken zu übertragen und damit den aktuellen Stand kontinuierlich zu verifizieren.

Hubschrauber werden vorschlagsgemäß neben Allwetter-Flugführungs- und Hinderniswarnsystemen (Heliradar) auch digitale dreidimensionale Karten einsetzen, die im Zusammenwirken mit realen Allwetter-Sichtsystemen und Satellitenortung eine verbesserte Bilddarstellung ermöglichen. Dreidimensionale Karten können jedoch ohne extrem hohen Aufwand nicht auf tagesaktuellen Stand gehalten werden und die heute übliche Verfügbarkeit mittels CD schränkt die Aktualität nochmals drastisch ein. Durch die dedizierte Anwendung von Telematiksystemen können hier durch das vorgeschlagene Telematikverfahren zwei wesentliche Verbesserungen erreicht werden. Zum einen kann ein Hubschrauber nun vor Missionsbeginn per Mobilfunk alle Änderungen aus einer Datenbank abrufen, die sich seit dem Zeitpunkt seiner letzten Datenspeicherung ereignet haben und damit seine eigene Datenbasis aktualisieren. Um den Übertragungsaufwand zu reduzieren, kann er sich dabei auf sein voraussichtliches Einsatzgebiet oder sein aktuelles, durch Ortung bestimmtes Umfeld beschränken. Weitere Datenabrufe sind auch immer während des Fluges möglich, so daß auch zusätzliche Gebiete aktualisiert werden können. Zum anderen ermöglicht der Datenvergleich zwischen einem realen Allwetter-Sichtsystem und den Kartendaten eine laufende Ergänzung bzw. Korrektur der Kartendaten, die über Telematik an die zentrale Kartendatenbank rückübertragen werden.

Ähnlich wie vorbeschrieben, wird mit einer Vielzahl anderer Daten verfahren, die der Hubschrauber aus weiteren Datenbanken abruft und mit deren aktuellem Stand er umgekehrt auch andere Datenbanken "füttern" kann. Hierfür kommen alle Daten in Frage, die der Hubschrauber durch seine mitgeführte Sensorik erfaßt. Dies werden vorrangig aktuelle Wetterdaten oder Videobilder sein, die durch optische Kameras oder Radar - wie z.B. das eingebaute Allwettersichtsystem aufgenommen werden. Die Telematik ermöglicht darüber hinaus - wie bereits erwähnt - eine unmittelbare Verbindung zu bestehenden bodengebundenen Systemen für Notruf- und Pannenhilfen,sowie Verkehrs-und Leitsystemen, was zu einer erheblichen Erweiterung des Informationsaustausches zu Gunsten eines effektive Hubschraubereinsatzes führt.

Ein weiterer Schritt des vorgeschlagenen Verfahrens ist die automatische SelbstÜberwachung des Zustandes von Hubschrauber und Besatzung durch regelmäßige Übermittlung der entsprechenden Daten an eine Zentrale oder Leitstelle.Dadurch können Wartungen, Ersatzteilversorgung usw. schon im voraus geplant bzw. vorbereitet werden.

Bei Rettungshubschrauber-Einsätzen erlaubt das vorgeschlagene Verfahren die Übermittlung von Patienten-Diagnosedaten zur Bestimmung des geeigneten Krankenhauses, dessen Vorbereitung zur Aufnahme und Versorgung des Patienten und Spezialistenbereitstellung zur Hilfeleistung für die Notfallmediziner an Bord des Hubschraubers. Dies alles ist schon beim Bergungsvorgang zu bewerkstelligen, geschieht praktisch in Sekundenschnelle durch reinen Datenabgleich geschlüsselter Diagnosefakten und wird durch eine automatisch eingeleitete mündliche Kontaktaufnahme verifiziert. Damit entfällt ein umständliches und zeitraubendes Anrufen mehrererKrankenhäuser etc. Noch während des Anfluges werden dem aufnehmenden Krankenhaus und gegebenenfalls weiteren Spezialkliniken - wie Augenklinik etc.- laufend alle Patientendaten übermittelt, um so die Primärversorgung einzuleiten und zu beschleunigen. Gegebenfalls werden diese Informationen direkt an die zu beteiligenden Stationen des Krankenhauses ( Chirurgie, HNO usw.) gesendet. Auch eine Hilfestellung von Spezialisten für die Notfallmediziner an Bord ist damit möglich.

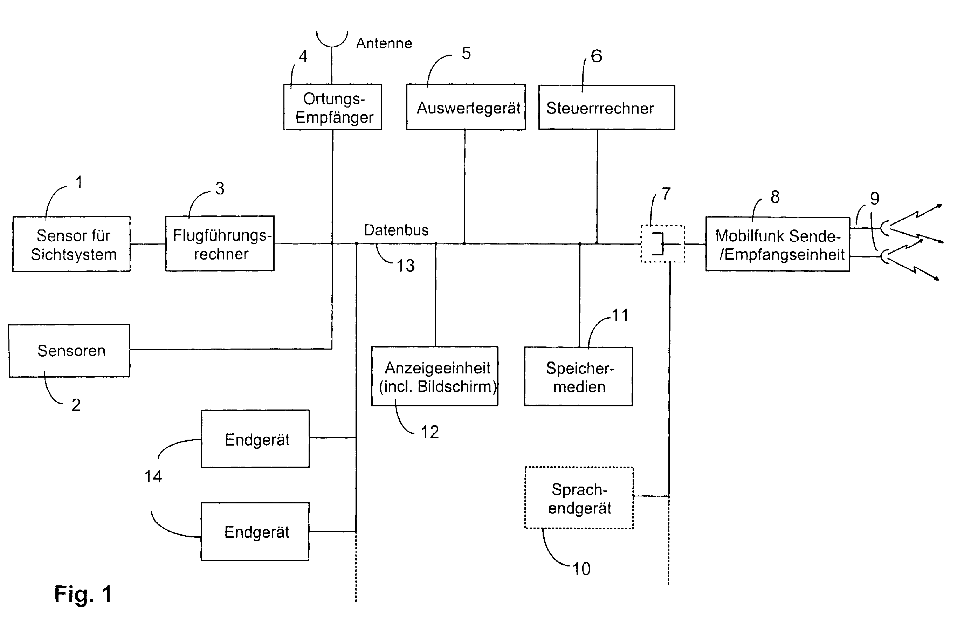

Aus der Figur 1 ist ein gerätemäßiger Aufbau eines Ausführungsbeispiels zur Durchführung des vorgeschlagenen Telematik-Verfahrens ersichtlich. Die Daten eines optischen oder radargestützten Sensors 1 für ein allwetterfähiges Sichtsystem werden im Flugführungsrechner 3 aufbereitet und stehen schließlich in Form von Bildern, Hindernisdarstellungen und Warnungen, sowie allgemeinen Fluginformationen zur Verfügung. Optional können Sensoren 2 weitere Daten des Hubschrauberumfeldes aufnehmen. Ein Ortungsempfänger 4 mißt die jeweils aktuelle Hubschrauber-Position. Das Auswertegerät 5 dient dem Vergleich dieser Position mit anderen Positions-Informationen bzw. dem Vergleich anderer im Hubschrauber eingegebener Daten (z.B. Patientendaten) mit Datenbankinhalten terrestrischer Gegenstellen 24, 25 oder Daten aus Speichermedien an Bord 11.

Die Auswahl der Übertragungswege kann aber auch durch die Mobilfunk-Sende-/Empfangs-Einheit 8 abgewickelt werden. Das Auswertegerät 5 kann auch bereits im Steuerrechner 6 implementiert sein, der den Hubschrauber-Datenbus 13 steuert und sämtliche Sprach- und Datenflüsse gemäß einem ausgewählten Ablauf steuert. Die Anzeigeeinheit inklusive Bildschirm 12 dient im wesentlichen der Darstellung von Fluginformationen und die Endgeräte 14 der Kommunikation anderer Daten oder der Sprache. Alternativ können auch reine Sprachendgeräte 10 über einen entsprechenden Multiplexer 7 angeschlossen werden. Die Mobilfunk-Sende-/Empfangseinheit 8 übernimmt die Kommunikation über Satellit oder terrestrische Mobilfunknetze und wählt hierfür die geeignetsten Übertragungswege aus. Die zugehörigen Antennen 9 sind schaltbar und sorgen für eine optimale Funkverbindung.

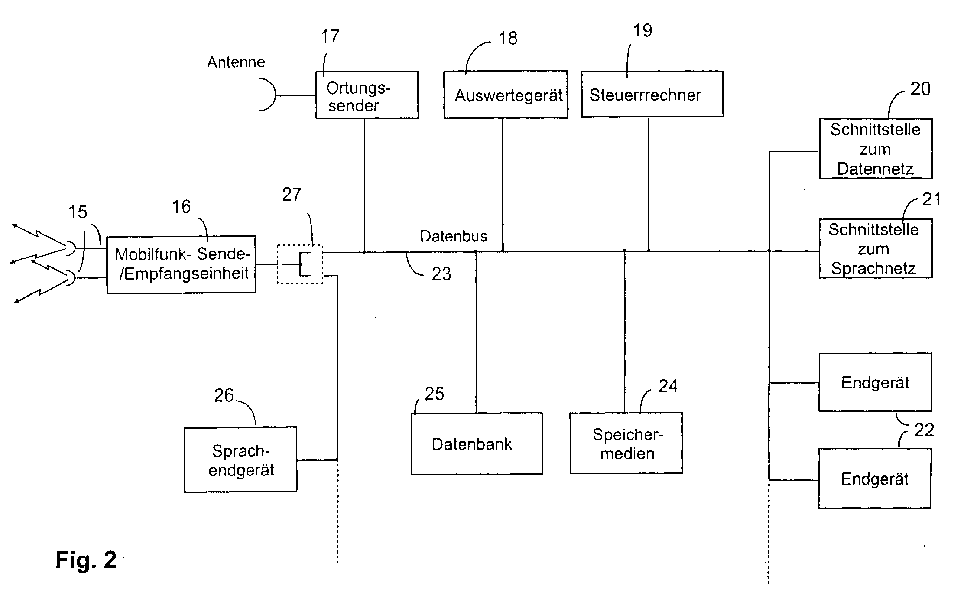

Die Fig.2 bezieht sich auf die mögliche Ausstattung von Zentralen für das Verbands- und Flottenmanagment sowie die Flugsicherheit von Hubschraubern, Systemen zur Verbindung mit Notruf- und Pannenhilfen, Verkehrs- und Leitsystemen aller Art sowie Kliniken zur Primärversorgung von Patienten. Je nach Art der Telematik-Leistung und der damit verbundenen terrestrischen Gegenstelle können die eingesetzten Einheiten trotz gleicher Bezeichnung voneinander abweichende Aufgaben ausführen.

Die Mobilfunk-Sende / Empfangseinheit 16 der terrestrischen Gegenstelle umfaßt eine Bodenfunkstelle für Satelliten-Mobilfunk oder einen anderen Anschluß an das Satelliten-Mobilfunknetz sowie einen Anschluß an eines oder mehrere der vorhandenen terrestrischen Mobilfunknetze. Ein optionaler Ortungssender 17 kann durch Korrekturinformationen (z.B. Delta-GPS) die Ortungsgenauigkeit des Hubschraubers verbessern und dessen Anflug erleichtern. Das Auswertegerät 18 dient dem Vergleich der Hubschrauber-Position mit anderen Positionsinformationen oder dem Vergleich anderer im Hubschrauber eingegebener Daten (z.B. Daten von Patienten) oder anderweitig ermittelter Daten mit Datenbankinhalten 24, 25 oder Daten aus einem innerbetrieblichen bzw. einem öffentlichen Datennetz 20. Die Auswerteeinheit 18 kann im Steuerrechner 19 implementiert sein, der den Datenbus 23 steuert. Die Endgeräte 22 dienen der Kommunikation von Daten und/oder von Sprache. Alternativ sind auch reine Sprachenendgeräte 26 über einen entsprechenden Multiplexer 27 angeschlossen. Eine Schnittstelle zum Sprachnetz 21 stellt eine Verbindung zu innerbetrieblichen oder öffentlichen Kommunikationssystemen her.

## Patentansprüche

1. Telematik-Verfahren für Hubschrauber mit allwetterfähigem Flugführungs- und Hinderniswarnsystem, das für die Mobilkommunikation (8,16) terrestrische oder satellitengestützte Mobilfunknetze nutzt, und mit einem satellitengestützten und/oder terrestrischen Ortungssystem (4, 17) verbunden ist, wobei
a. durch ganz oder teilweise automatisierte Übertragung von Positions-und Einsatzinformationen zwischen Hubschrauber und einer Zentrale, basierend auf der Verbindung eines Ortungssystems (4, 17) mit mobiler Sprach- und/oder Datenübertragung ein Verbands- und Flottenmanagement aufgebaut wird,
b. eine automatische, halbautomatische oder manuell gesteuerte Kommunikation mit Datenbanken (25) erfolgt, um für Missionszwecke und/oder Flugsicherheit relevante Daten abzurufen,
c. eine mittelbare oder unmittelbare Mobilfunkverbindung zu bestehenden bodengebundenen Systemen (20, 21) für Notruf- und Pannenhilfen, Verkehrs-und Leitsystemen aller Art hergestellt und aufrechterhalten wird,
d. Daten zum Zustand des Hubschraubers und/oder der Besatzung zur effektiven Einsatzplanung, Wartung und Ersatzteilversorgung übermittelt werden,
**dadurch gekennzeichnet, dass**
eine Übermittlung von Patienten-Diagnosedaten zur Auswahl des geeignetsten Krankenhauses, dessen Vorbereitung auf die Primärversorgung sowie zur Hilfestellung von Spezialisten für die Notfallmediziner an Bord erfolgt und während des Fluges aktuelle für die Missionszwecke und/oder Flugsicherheit relevante Daten aus dem Umfeld des Hubschraubers, die mit am Hubschrauber mitgeführten optischen, radargestützten oder anderen Sensoren erfasst werden, laufend an Datenbanken übertragen werden und damit der aktuelle Stand der Datenbanken kontinuierlich verifiziert wird.

2. Telematik-Verfahren nach Anspruch 1, **dadurch gekennzeichnet, dass** die Übertragung (8, 16) von Sprache und Daten sowohl über ein terrestrisches Mobilfunknetz als auch über ein Satelliten-Mobilfunknetz als auch gleichzeitig über beide Netze abwickelbar ist.

3. Telematik-Verfahren nach Anspruch 1 oder 2, **dadurch gekennzeichnet, daß** die Auswahl des oder der Übertragungswege nach Qualitätskriterien der Übertragung und Erreichbarkeit der Gegenstelle automatisch, halbautomatisch oder manuell abwickelbar ist.

4. Telematik-Verfahren nach einem der Ansprüche 1-3, **dadurch gekennzeichnet, dass** die Satelliten-Mobilfunkantenne (9) oberhalb des Hauptrotorkopfes und oberhalb des Heckrotors, bei Hubschraubern ohne Heckrotor nahe dem hinteren Hubschrauberende montiert sind und jede für sich aber auch beide gemeinsam mit Raum-und Frequenzdiversity für eine optimale Funkübertragung genutzt werden.

5. Telematik-Verfahren nach einem der Ansprüche 1-3, **dadurch gekennzeichnet, dass** die terrestrischen Mobilfunkantennen (9) an den höchsten und niedrigsten Stellen des Hubschraubers, also oberhalb des Hauptrotorkopfes und oberhalb des Heckrotors, bei Hubschraubern ohne Heckrotor nahe dem hinteren Hubschrauberende sowie an der Unterseite des Hubschraubers vorne, hinten und mittig montiert sind und jede für sich aber auch beide gemeinsam mit Raum-und Frequenzdiversity für eine optimale Funkübertragung genutzt werden.

6. Telematik-Verfahren nach einem der Ansprüche 1-5, **dadurch gekennzeichnet, dass** die Satelliten-Mobilfunkantennen (9) und die oberen Antennen (9) für den terrestrischen Mobilfunk miteinander verbunden sind oder das gleiche Strahlerelement benutzen.

7. Telematik-Verfahren nach einem der Ansprüche 1-6, **dadurch gekennzeichnet, daß** die unteren Antennen für den terrestrischen Mobilfunk eine Richtwirkung aufweisen und im Flug mechanisch oder elektronisch auf eine möglichst günstige Bodenfunk- stelle nachgeführt werden.

8. Telematik-Verfahren nach einem der Ansprüche 1 bis 7, **dadurch gekennzeichnet, dass** zum Zweck der Kollisionswarnung laufend Positionsmeldungen an eine Zentrale übermittelt werden, die entweder ein Auswertesystem (18) zur Berechnung von Kollisionsgefahren der Hubschrauber untereinander oder mit anderen Hindernissen, deren Position durch Informationen einer digitalen Karte bzw. durch Positionsmeldung über Funk bekannt ist, betreibt, oder die Positionsdaten aller im Gebiet operierenden Hubschrauber und niedrig fliegender Flächenflugzeuge an alle Verkehrsteilnehmer im Luftraum weitergibt, wobei die Kollisionsgefahr von einem im Hubschrauber implementierten Auswertesystem (5) ermittelt wird.

9. Telematik-Verfahren nach einem der Ansprüche 1 bis 8, **dadurch gekennzeichnet, daß** dem Verfahren eine Straßenkarte vektorisiert im GDF-Format beigegeben wird.

10. Telematik-Verfahren nach einem der Ansprüche 1 bis 9, **dadurch gekennzeichnet, daß** aktuelle Daten oder Änderungsdaten aus einer digitalen Karte vor und während der Mission an den Hubschrauber übermittelt werden, um dessen Datenbasis zu aktualisieren.

11. Telematik-Verfahren nach einem der Ansprüche 1 bis 10, **dadurch gekennzeichnet, dass** aktuelle Daten zur Umgebung des Hubschraubers mittels eines bordeigenen optischen oder radarbasierten realen Sichtsystems (1) aufgenommen, mit der digitalen Karte verglichen und Änderungsdaten vom Hubschrauber über Mobilfunk oder Speichermedien an die Kartendatenbank zur Aktualisierung der Hinderniskulissen zurück-übermittelt werden.

12. Telematik-Verfahren nach einem der Ansprüche 1 bis 10, **dadurch gekennzeichnet, dass** vom Hubschrauber mittels Sensoren (2) aufgenommene aktuelle Daten aller Art über Mobilfunk (9, 15) oder Speichermedien (11) an eine Datenbank (25) übermittelt werden

## Claims

1. Telematics method for helicopters with an all-weather flight-control and obstruction warning system, which uses terrestrial or satellite-assisted mobile radio networks for mobile communication (8, 16) and is connected to a satellite-assisted and/or terrestrial position-finding system (4, 17) wherein
a) unit and fleet management are set up by entirely or partially automated transmission of position and operational information between a helicopter and a control centre, based on the connection of a position-finding system (4, 17), using mobile speech and/or data transmission,
b) communication takes place automatically, semiautomatically or under manual control with databases (25) in order to call data which is relevant for mission purposes and/or flight safety,
c) an indirect or direct mobile radio connection is set up and maintained to existing ground-based systems (20, 21) for emergency call and rescue aids, traffic systems and control systems of all types,
d) data relating to the status of the helicopter and/or of the crew is transmitted for effective operational planning, maintenance and spare-parts supply,
**characterized in that**
patient diagnosis data is transmitted, in order to select the most suitable hospital, its preparation for primary supply and to provide the assistance of specialists for the emergency paramedics on board, and current data which is relevant for mission purposes and/or for flight safety from the air surrounding the helicopter is recorded using optical, radar-based or other sensors that are also carried on the helicopter, transmitted continuously during flight to databases, and the current status of the databases is thus continuously verified.

2. Telematics method according to Claim 1, **characterized in that** the transmission (8, 16) of speech and data can be handled both via a terrestrial mobile radio network as well as via a satellite mobile radio network and also via both networks at the same time.

3. Telematics method according to Claim 1 or 2, **characterized in that** the choice of the transmission path or paths may be made automatically, semiautomatically or manually on the basis of quality criteria of the transmission and accessibility of the remote location.

4. Telematics method according to one of Claims 1-3, **characterized in that** the satellite mobile radio antenna (9) is mounted above the main rotor head and above the tail rotor, in the case of helicopters without a tail rotor close to the rear helicopter end, and each is used in its own right or else the two together with space and frequency diversity for optimum radio transmission.

5. Telematics method according to one of Claims 1-3, **characterized in that** the terrestrial mobile radio antennas (9) are mounted at the highest and lowest points of the helicopter, that is to say above the main rotor head and above the tail rotor, in the case of helicopters without a tail rotor close to the rear helicopter end and on the underneath of the helicopter at the front, at the rear and in the centre, and each is used in its own right or else the two together with space and frequency diversity for optimum radio transmission.

6. Telematics method according to one of Claims 1-5, **characterized in that** the satellite mobile radio antennas (9) and the upper antennas (9) for the terrestrial mobile radio are connected to one another or use the same antenna element.

7. Telematics method according to one of Claims 1-6, **characterized in that** the lower antennas for terrestrial mobile radio have a directional effect and, in flight, are mechanically or electronically slaved to as good a ground radio station as possible.

8. Telematics method according to one of Claims 1-7, **characterized in that,** for collision warning purposes, position messages are continuously transmitted to a control centre which operates either an evaluation system (18) for calculation of collision hazards between the helicopters or other obstructions, whose position is known from information on a digital map or by position signalling by radio, or the position data of all the helicopters and low-flying fixed-wing aircraft operating in the region is passed to all aircraft in the airspace, with the collision hazard being determined by an evaluation system (5) which is implemented in the helicopter.

9. Telematics method according to one of Claims 1 to 8, **characterized in that** the method uses an associated road map, vectorized in the GDF format.

10. Telematics method according to one of Claims 1 to 9, **characterized in that** the current data or change data from a digital map is transmitted before and during the mission to the helicopter, in order to update its database.

11. Telematics method according to one of Claims 1 to 10, **characterized in that** current data relating to the air surrounding the helicopter is recorded by means of an on-board, optical or radar-based real vision system (1), is compared with the digital map and change data of the helicopter is transmitted back via mobile radio or storage media to the map database in order to update the obstruction links.

12. Telematics method according to one of Claims 1 to 10, **characterized in that** current data of all types, recorded by the helicopter by means of sensors (2), is transmitted via mobile radio (9, 15) or storage media (11) to a database (25).

## Revendications

1. Procédé de télématique pour hélicoptères équipés d'un système de guidage de vol à capacité tout temps et d'un système avertisseur d'obstacles, utilisant des réseaux de radiocommunication mobiles terrestres ou par satellites pour la communication mobile (8, 16), et relié à un système de localisation (4, 17) par satellites et/ou terrestre, dans lequel
a. on construit une gestion d'unité et de flotte au moyen de la transmission totalement ou partiellement automatisée d'informations de position et de mission entre les hélicoptères et une centrale, basée sur la liaison d'un système de localisation (4, 17) avec la transmission mobile de la parole et/ou de données,
b. pour consulter les données relatives aux objectifs des missions et/ou de la sécurité aérienne, on réalise une communication avec des banques de données (25), commandée automatiquement, semi-automatiquement ou manuellement,
c. on établit et on maintient une liaison par radiocommunication mobile directe ou indirecte avec les systèmes existants (20, 21) liés au sol pour les appels d'urgence et les aides en cas de pannes, les systèmes de trafic et de guidage de toutes natures,
d. on transmet des données sur l'état de l'hélicoptère et/ou de l'équipage pour la planification efficace de la mission, la maintenance et l'approvisionnement des pièces de rechange,
**caractérisé en ce qu'**on effectue une transmission de données diagnostiques de patients pour choisir l'hôpital le plus approprié, préparé pour les premiers soins ainsi que pour l'aide de spécialistes aux urgentistes embarqués, **en ce qu'**on transmet en permanence pendant le vol, des données relatives aux objectifs des missions et/ou de la sécurité aérienne, provenant de l'environnement de l'hélicoptère qui sont enregistrées par les capteurs optiques, à base d'un radar ou autres embarqués dans l'hélicoptère et qu'on vérifie ainsi en continu l'état courant des banques de données.

2. Procédé de télématique selon la revendication 1, **caractérisé en ce que** la transmission (8, 16) de la parole et de données peut se dérouler aussi bien par l'intermédiaire d'un réseau de radiocommunication mobile terrestre que par l'intermédiaire d'un réseau de radiocommunication mobile satellite et aussi simultanément par l'intermédiaire des deux réseaux.

3. Procédé de télématique selon la revendication 1 ou 2, **caractérisé en ce que** le choix du ou des chemins de transmission peut se dérouler de manière automatique, semi-automatique ou manuelle selon des critères de qualité de transmission et de l'accessibilité du correspondant.

4. Procédé de télématique selon une des revendications 1 - 3, **caractérisé en ce que** les antennes de radiocommunication mobile par satellite (9) sont montées au-dessus de la tête du rotor principal et au-dessus du rotor de queue, à proximité de l'extrémité arrière de l'hélicoptère pour les hélicoptères sans rotor de queue, et **en ce qu'**on utilise chacune d'entre elles individuellement mais aussi les deux simultanément avec une diversité de l'espace et des fréquences pour une transmission par radiocommunication optimale.

5. Procédé de télématique selon une des revendications 1 - 3, **caractérisé en ce que** les antennes de radiocommunication mobiles terrestres (9) sont montées aux emplacements les plus élevés et les plus bas de l'hélicoptère, c'est à dire au-dessus de la tête du rotor principal et au-dessus du rotor de queue, à proximité de l'extrémité arrière de l'hélicoptère ainsi qu'à la partie inférieure de l'hélicoptère à l'avant, à l'arrière et au milieu pour les hélicoptères sans rotor de queue, et **en ce qu'**on utilise chacune d'entre elles individuellement mais aussi les deux simultanément avec une diversité de l'espace et des fréquences pour une transmission par radiocommunication optimale.

6. Procédé de télématique selon une des revendications 1 - 5, **caractérisé en ce que** les antennes de radiocommunication mobile par satellite (9) et les antennes (9) précédentes pour la liaison par radiocommunication mobile terrestre, sont reliées entre elles ou utilisent le même dispositif radiateur.

7. Procédé de télématique selon une des revendications 1 - 6, **caractérisé en ce que** les antennes inférieures pour la liaison par radiocommunication mobile terrestre présentent un effet directif et que pendant le vol, elles sont pointées mécaniquement ou électroniquement vers un emplacement de radiocommunication au sol aussi avantageux que possible.

8. Procédé de télématique selon une des revendications 1 à 7, **caractérisé en ce que** dans un but d'avertissement de collisions, des messages de position sont transmis en permanence à une centrale qui soit exploite un système d'analyse (18) pour le calcul des risques de collisions des hélicoptères entre eux ou avec d'autres obstacles dont la position est connue par l'intermédiaire des informations d'une carte numérique respectivement par message radio de position, soit transmet à tous les participants au trafic dans l'espace aérien, les données de position de tous les hélicoptères opérant dans la région et des aéronefs à voilure fixe volant bas, le risque de collision étant déterminé par un système d'analyse (5) implémenté dans l'hélicoptère.

9. Procédé de télématique selon une des revendications 1 à 8, **caractérisé en ce qu'**on adjoint au procédé une carte routière vectorisée au format GDF.

10. Procédé de télématique selon une des revendications 1 à 9, **caractérisé en ce qu'**on communique à l'hélicoptère des données courantes ou des données de modifications d'une carte numérique avant et pendant la mission, pour actualiser sa base de données.

11. Procédé de télématique selon une des revendications 1 à 10, **caractérisé en ce qu'**on enregistre des données courantes de l'environnement de l'hélicoptère au moyen d'un système de vision réel (1) embarqué optique ou par radar, qu'on les compare avec la carte numérique et qu'on renvoie les données de modifications de l'hélicoptère par radiocommunication mobile ou par des médias de mémorisation vers la banque de données de cartes pour l'actualisation de l'environnement d'obstacles.

12. Procédé de télématique selon une des revendications 1 à 10, **caractérisé en ce qu'**à partir de l'hélicoptère, on transmet des données courantes de toutes natures, enregistrées au moyens de capteurs (2), par radiocommunication mobile (9, 15) ou par des médias de mémorisation (11) vers une banque de données (25).
